# EUROPÄISCHE PATENTSCHRIFT

(11) **EP 2 765 334 B1**
(45) Veröffentlichungstag und Bekanntmachung des Hinweises auf die Patenterteilung: **23.09.2015**
(21) Anmeldenummer: 13198251.4
(22) Anmeldetag: 19.12.2013
(51) Int. Cl.: F16G 1/08, B60C 9/18, B60C 9/00, F16G 1/12

(54) **Festigkeitsträgerlage für Fahrzeugluftreifen sowie für Antriebsriemen**
Reinforcing layer for pneumatic vehicle tyres, and for drive belts
Couche de renfort pour pneus de véhicules et pour courroies d'entraînement

(30) Priorität: 08.02.2013 DE 102013101251
(43) Veröffentlichungstag der Anmeldung: 13.08.2014
(73) Patentinhaber: Continental Reifen Deutschland GmbH, 30165 Hannover (DE)
(72) Erfinder: Justine, Carole, 31535 Scharrel (DE); Wahl, Günter, 31249 Hohenhameln (DE); Krüger, Jörn, 66399 Mandelbachtal (DE); Kramer, Thomas, 32049 Herford (DE)
(74) Vertreter: Finger, Karsten

(56) Entgegenhaltungen:
- EP-A2- 0 329 589
- DE-A1- 19 716 179
- DE-A1-102006 061 389
- US-A1- 2012 021 860

## Beschreibung

Die Erfindung betrifft eine Festigkeitsträgerlage für Fahrzeugluftreifen sowie für Antriebsriemen, wobei die Festigkeitsträgerlage zumindest einen Festigkeitsträger aufweist, welcher in elastomeres Material eingebettet ist, wobei der Festigkeitsträger aus nicht-metallischen Materialien besteht und sein Querschnitt der Bedingung a < b entspricht, wobei a die Querschnittshöhe und b die Querschnittsbreite des Festigkeitsträgers definiert, und wobei der Festigkeitsträger in der Festigkeitsträgerlage derart angeordnet ist, dass die Erstreckungsrichtung von b in etwa parallel zur flächigen Erstreckung der Festigkeitsträgerlage ausgerichtet ist. Ferner betrifft die Erfindung einen Fahrzeugluftreifen, enthaltend zumindest eine solche Festigkeitsträgerlage. Ferner betrifft die Erfindung einen Fahrzeugluftreifen, enthaltend zumindest eine solche Festigkeitsträgerlage der Gürtelbandage und / oder des Gürtels und / oder der Karkasse und / oder der Wulstverstärkung. Ferner betrifft die Erfindung einen Antriebsriemen enthaltend zumindest eine solche Festigkeitsträgerlage.

Festigkeitsträgerlagen für elastomere Erzeugnisse, insbesondere für die Karkasse, den Gürtel, die Gürtelbandage oder die Wulstverstärkung von Fahrzeugluftreifen, sind dem Fachmann in Material und Aufbau in unterschiedlichen Ausführungen bekannt. Der mindestens eine Festigkeitsträger dieser Festigkeitsträgerlage wird hierbei, z.B. durch Kalandrieren, in eine Elastomermischung eingebettet, um als Festigkeitsträgerlage im Elastomerprodukt eingesetzt werden zu können. Es ist bekannt und üblich, für die Festigkeitsträger von Festigkeitsträgerlagen von Fahrzeugreifen, insbesondere für die Karkasse und / oder den Gürtel und / oder die Gürtelbandage und / oder die Wulstverstärkung, Garne oder Korde zu verwenden, welche einen im Wesentlichen runden Querschnitt aufweisen. Die Filamente der Garne und Korde sind üblicherweise miteinander willentlich verdreht.

Aus der US 2012/0090756 A1 ist ein Fahrzeugluftreifen bekannt, dessen Gürtelbandage und/oder Gürtel durch mindestens eine Festigkeitsträgerlage, beinhaltend zumindest eine Schicht aus einer multiaxial gezogenen thermoplastischen Polymerfolie mit einem Querschnitt a < b, welche zwischen und in Kontakt mit zwei Lagen elastomeren Materials platziert ist, verstärkt ist. Die Folienschichtdicke ist hierbei geringer als der Durchmesser der für eine solche Festigkeitsträgerlage üblichen Festigkeitsträger runden Querschnitts. Somit ist auch die Höhe der Festigkeitsträgerlage verringert.

Aus der gattungsbildenden DE 197 16 179 A1 ist eine Festigkeitsträgerlage geeignet für Fahrzeugluftreifen sowie für Antriebsriemen bekannt, wobei die Festigkeitsträgerlage mindestens einen in elastomeres Material eingebetteten Festigkeitsträger mit Querschnitt a < b aufweist. Der Festigkeitsträger besteht aus einer verstärkenden Komponente wie einem thermoplastischen Polymer sowie aus darin eingebetteten Aramid-Verstärkungsfasern, welche zur besseren Haftung an der verstärkenden Komponente mit einem Haftvermittler versehen sind. Die Fasern können als Kurzfasern, Langfasern oder als Filamente vorliegen.

Die DE 10 2006 061 389 A1 offenbart eine Gürtellage eines Fahrzeugluftreifens, wobei die Gürtellage aus elastomerem Material gebildet ist, in welches Kurzfasern aus Aramid mit einem durchschnittlichen Durchmesser von 0,001 mm bis 0,02 mm und einem durchschnittlichen Verhältnis ihrer Länge zu ihrem Durchmesser von 100 bis 2000 eingebracht sind. Die Kurzfasern können mit einem Haftvermittler imprägniert sein, um die Haftung zum elastomeren Material sicherzustellen.

Die EP 0 329 589 A2 offenbart einen Fahrzeugluftreifen mit einer Verstärkungslage aus einem elastomeren Material, in welchem kurze, diskontinuierliche, fibrillierte Aramidfasern verteilt sind. Diese Fasern sind aus einem Stamm der Länge 0,2 mm bis 5 mm und einer Vielzahl an Fibrillen, welche sich vom Stamm nach außen erstrecken, gebildet.

Die US 2012/0021860 A1 offenbart einen flachen Gürtel, welcher eine Festigkeitsträgerlage aufweisend in elastomeres Material eingebettete spiralförmig angeordnete Aramid-Korde, welche mit einem Haftvermittler zur besseren Haftung zum elastomeren Material ausgestattet sind. Das elastomere Material der Festigkeitsträgerlage weist Kurzfasern auf, welche quer zur Erstreckungsrichtung der Korde angeordnet sind.

Die Reifenentwicklung geht dahin, Fahrzeugluftreifen mit geringem Rollwiderstand bereitzustellen.

Es hat sich herausgestellt, dass die Höhe der Festigkeitsträgerlagen von Fahrzeugreifen, insbesondere der Festigkeitsträgerlagen von Karkasse, Gürtel oder Gürtelbandage, großen Einfluss auf den Rollwiderstand des Fahrzeugluftreifens hat. Die Höhe einer Festigkeitsträgerlage wird im Wesentlichen durch die Querschnittshöhe a des zumindest einen Festigkeitsträgers der Festigkeitsträgerlage sowie die Dicke der Elastomerschicht, welche den Festigkeitsträger ummantelt, bestimmt. Eine Reduzierung der Höhe einer Festigkeitsträgerlage durch Reduzierung der Höhe des Festigkeitsträgers und / oder Reduzierung der Dicke der ummantelnden Elastomerschicht bedingt eine geringere Hysterese und somit eine Verbesserung des Rollwiderstandes, insbesondere durch die mit der reduzierten Höhe einhergehende Reduzierung des eingesetzten Materials. Die Reduzierung insbesondere von elastomerem Material wirkt sich auch über die Gewichtsreduzierung positiv auf den Rollwiderstand aus. Für die ummantelnde Elastomerschicht ist eine Mindestschichtdicke erforderlich. Oftmals ist diese Mindestschichtdicke schon erreicht. Eine Verbesserung des Rollwiderstandes durch Reduzierung der Höhe der Festigkeitsträgerlagen ist somit beim Einsatz der üblichen Festigkeitsträger mit rundem Querschnitt schwierig, da auch der Durchmesser, also die Querschnittshöhe, der Festigkeitsträger durch die geforderten Materialeigenschaften, wie beispielsweise der Festigkeit, nach unten hin begrenzt ist.

Aus der WO 2009/068541 A2 ist ein Herstellungsverfahren für ein Band bekannt, welches eine Vielzahl an Filamenten aus Aramid enthält, welche in etwa parallel zur Erstreckungsrichtung des Bandes angeordnet sind, wobei die Filamente innerhalb des Bandes mittels vernetzbarem Harz, flüssigem thermoplastischem Harz oder Wachs zusammengehalten sind. Als Einsatzbereich für ein solches Band wird die Verwendung als orthopädisches Band, Röhren-, Schlauch- oder Rohrverstärkungsband, Verstärkung von Segeln und Band für die Verwendung in elektronischen oder optischen Faserkabeln genannt. Die Offenbarung schweigt sich über die Eignung einer Verwendung besagter Bänder in Festigkeitsträgerlagen von Fahrzeugluftreifen sowie von Antriebsriemen aus.

Der vorliegenden Erfindung liegt die Aufgabe zu Grunde, eine alternative Festigkeitsträgerlage für Fahrzeugluftreifen sowie für Antriebsriemen bereitzustellen. Insbesondere in Bezug auf Fahrzeugluftreifen soll eine alternative Festigkeitsträgerlage bereitgestellt werden, durch welche der Rollwiderstand des Fahrzeugluftreifens verbesserbar ist.

Die Aufgabe wird gelöst, indem der Festigkeitsträger ein Band ist, welches eine Vielzahl an Filamenten aus Aramid enthält, welche in etwa parallel zur Längserstreckung des Bandes angeordnet sind, und indem die Filamente innerhalb des Bandes mittels eines Haftvermittlers zusammengehalten sind und indem das Band eine Feinheit von 50 bis 7000 dtex, bevorzugt von 500 bis 3500 dtex, besonders bevorzugt von 1200 bis 1500 dtex, aufweist, und indem das Band eine Anzahl von 25 bis 4500 Filamenten, bevorzugt eine Anzahl von 450 bis 2000 Filamenten, besonders bevorzugt eine Anzahl von 500 bis 1200 Filamenten, aufweist.

Überraschenderweise eignen sich diese flachen Bänder, die Filamente enthalten, wobei die Filamente nicht willentlich miteinander verdreht sind, sondern in etwa parallel zueinander angeordnet sind, als Festigkeitsträger für Festigkeitsträgerlagen von Fahrzeugluftreifen sowie von Antriebsriemen.

Bedeutend ist hierbei, dass durch den Einsatz von Bändern mit sehr flachem Querschnitt als Festigkeitsträger eine Festigkeitsträgerlage mit geringer Höhe bereitgestellt wird.

Bedeutend ist hierbei, dass das Band in Erstreckungsrichtung der Bandbreite b in etwa parallel zur Erstreckungsrichtung der Festigkeitsträgerlage ist. Hierdurch ist die Festigkeitsträgerlage sehr dünn ausführbar und dünner als beispielsweise bei Verwendung von Festigkeitsträgern mit gleicher Querschnittsfläche aber rundem Querschnitt.

Der Querschnitt des Bandes weist eine sehr flache Form auf. Querschnittshöhe a und Querschnittsbreite b sind entlang der Erstreckungslänge des Bandes weitgehend konstant, können aber im Rahmen von Toleranzen variieren. Das Band weist eine Vielzahl an Filamenten auf. Eine Vielzahl an Filamenten bedeutet hierbei eine Anzahl von mindestens 20 Filamenten. Die Filamente sind im Wesentlichen in Längserstreckung des Bandes angeordnet. Sie sind nicht gezielt miteinander verdreht, sondern größtenteils zumindest abschnittsweise parallel angeordnet, wobei auch Kreuzungen von Filamenten möglich sind. Die geringe Querschnittshöhe a sowie die Querschnittsbreite b des Bandes wird durch die Anordnung der Filamente, welche vorrangig in Erstreckungsrichtung der Querschnittsbreite b nebeneinander angeordnet sind, bewirkt. Das Band selbst ist in der Festigkeitsträgerlage nicht gezielt verdreht angeordnet. Jedes Filament ist mit einem Haftvermittler verbunden und wird mittels dieses Haftvermittlers zumindest abschnittsweise mit anderen Filamenten des Bandes zusammengehalten.

Durch die geringe Querschnittshöhe a des zumindest einen Festigkeitsträgers ist die Höhe der Festigkeitsträgerlage reduziert. Dies bedingt eine geringere Hysterese. Auch durch die Einsparung an elastomerem Material sowie an Festigkeitsträgermaterial sind Hysterese sowie Gewicht reduziert. Beim Einsatz in Fahrzeugluftreifen kann somit ein verringerter Rollwiderstand erwirkt werden.

Im Querschnitt der Festigkeitsträgerlage sind die Festigkeitsträger in etwa parallel zueinander ausgerichtet. Hierbei kann es sich um mindestens zwei Festigkeitsträger handeln, die parallel zueinander ausgerichtet sind, oder um einen Festigkeitsträger, der parallel zueinander ausgerichtete Abschnitte aufweist. Beispielsweise kann es sich hierbei um einen Festigkeitsträger der Festigkeitsträgerlage der Gürtelbandage eines Fahrzeugluftreifens handeln, der in etwa parallel zur Umfangsrichtung des Fahrzeugluftreifens mit mehr als zwei Umwicklungen um einen Bereich des Gürtels entlang der axialen Breite gewickelt ist. Die Festigkeitsträger können überlappend, insbesondere mit einem Überlapp der Breite c < b/2, beabstanded, insbesondere mit einem Abstand d < b, oder berührend, also mit einem Abstand d=0, angeordnet sein.

Als "Filament" wird im Sinne der Anmeldung entweder ein Filament oder eine Endlosfaser oder ein Spinnfasergarn aus verdrehten Fasern begrenzter Länge verstanden.

Aramide sind aromatische Polyamide, in deren Makromolekülen nach Definition der amerikanischen Federal Trade Commission mindestens 85 % der Amid-Gruppen direkt an zwei aromatische Ringe gebunden sind. Die Gruppe der Aramide beinhaltet meta-Aramide (beispielsweise erhältlich unter den Handelsnamen "Teijinconex" (Teijin Aramid) oder "Nomex" (DuPont)), para-Aramide (beispielsweise erhältlich unter den Handelsnamen "Twaron" (Teijin Aramid) oder "Kevlar" (DuPont)) und para-Aramid-Copolymere (beispielsweise erhältlich unter dem Handelsnamen "Technora" (Teijin Aramid)). Aramide sind Polymerisate, die auf zumindest den Monomeren Terephthaloyldichlorid (TDC) und monomeren Aminen basieren. Beispielsweise sind para-Aramide Polymerisate, die auf den Monomeren TDC und para-Phenylendiamin (PPD) basieren, meta-Aramide Polymerisate, die auf den Monomeren TDC sowie meta-Phenylendiamin basieren. Para-Aramid-Copolymeren sind Polymerisate, die auf den Monomeren TDC und PPD sowie einem weiteren Monomer basieren.

Es ist bekannt, dass Aramid einen besonders hohen Elastizitätsmodul aufweist und als Festigkeitsträger einer Festigkeitsträgerlage im fertig hergestellten Reifen vorteilhafte Eigenschaften des Nicht-Schrumpfens und der geringen plastischen Verformung zeigt.

Ein Vorteil der Erfindung besteht darin, dass mit den Bändern Aramid-Festigkeitsträger bereitgestellt werden, die im Gegensatz zu Folien einen höheren Elastizitätsmodul, eine höhere Bruchkraft und / oder höhere Reißfestigkeit aufweisen.

Die Eigenschaften des verwendeten Bandes, beispielsweise in Hinblick auf Festigkeit, Elastizitätsmodul oder Bruchdehnung, Ermüdung, Hafteigenschaften oder Hysterese, sind vom Fachmann in bekannter und angemessener Weise den geforderten Anfordernissen der entsprechenden Festigkeitsträgerlage, insbesondere von Karkasse, Gürtel, Gürtelbandage oder Wulstverstärkung, anzupassen.

Vorteilhaft ist weiter, dass die erfindungsgemäße Festigkeitsträgerlage in Aufbau und Einsatz sehr ähnlich zu üblichen Festigkeitsträgerlagen von Fahrzeugluftreifen ist, wodurch die Gesamtkonstruktion des Reifens weitgehend unverändert bleiben kann, wodurch eventuell nachteilige Effekte einer Veränderung der Gesamtkonstruktion vermieden werden.

Ein weiterer Vorteil besteht darin, dass die Verarbeitung von Bändern der beschriebenen Art zu Festigkeitsträgerlagen weitgehend analog zur Verarbeitung von herkömmlichen Festigkeitsträgern mit rundem Querschnitt erfolgen kann. Somit ist bei der Herstellung von Fahrzeugluftreifen nur eine minimale Anpassung der Produktionsschritte und / oder der Produktionsmaschinen erforderlich.

Die Filamente eines Bandes können alle aus dem selben Aramid der oben genannten Aramid-Gruppe sein, beispielsweise alle aus para-Aramid oder alle aus meta-Aramid. Ein Band kann aber auch eine Vielzahl an Filamenten aus einem Aramid, beispielsweise para-Aramid, sowie eine Vielzahl an Filamenten aus einem dazu verschiedenen Aramid, beispielsweise meta-Aramid oder ein para-Aramid-Copolymer, beinhalten. Ein Band kann auch neben einer Vielzahl an Filamenten aus Aramid eine Vielzahl an Filamenten aus zu Aramid verschiedenen Materialien, wie beispielsweise Nylon, enthalten. Die Filamente eines Bandes können sich auch in ihrer Feinheit unterscheiden. Hierdurch können positive Eigenschaften unterschiedlicher Filamente kombiniert werden.

Es ist zweckmäßig, wenn das Band eine Vielzahl an Filamenten aus para-Aramid enthält. Durch Einsatz unterschiedlicher Aramide können die Eigenschaften der Festigkeitsträger optimiert werden.

Es ist vorteilhaft, wenn der Haftvermittler ein vernetzbares Harz, ein flüssiges thermoplastisches Harz, ein Wachs oder eine Substanz, welche mit elastomerem Material wechselwirken kann, ist. Vorteilhaft ist, wenn der Haftvermittler aushärtbar ist und im Band in ausgehärtetem Zustand vorliegt. Vorteilhaft ist weiter, wenn das Gewicht des ausgehärteten Haftvermittlers 1 bis 50 Gew.-%, vorzugsweise 2 bis 30 Gew.-%, vorzugsweise 3 bis 15 Gew.-% des Gewichtes des Bandes ausmacht. Ein Haftvermittler, welcher mit elastomerem Material wechselwirken kann, kann beispielsweise vom Typ RFL (Resorcin-Formaldehyd-Latex) sein. Durch einen Haftvermittler, welcher mit elastomerem Material wechselwirken kann, kann eine zuverlässige Haftung des Festigkeitsträgers zum elastomeren Material erwirkt werden. Das Versehen des Festigkeitsträgers mit einer Haftimprägnierung entfällt somit.

Zweckmäßig ist es, wenn die Querschnittshöhe a der Bedingung 1 µm < a < 1500 µm, vorzugsweise 1 µm < a < 500 µm, bevorzugt 1 µm < a < 200 µm, besonders bevorzugt 80 µm < a < 150 µm, entspricht. Der Fahrzeugluftreifen, der solche Festigkeitsträger in Festigkeitsträgerlagen der Gürtelbandage, dem Gürtel und / oder der Karkasse aufweist, ist besonders in Bezug auf den Rollwiderstand bei guten übrigen Eigenschaften des Reifens verbessert.

Vorteilhaft ist es, wenn die Querschnittsbreite b der Bedingung 100 µm < b < 15000 µm, bevorzugt 300 µm < b < 10000 µm, genügt, und wenn das Verhältnis von Querschnittsbreite b zu Querschnittshöhe a die Bedingung 4000 > b / a > 1.5, insbesondere 200 > b / a > 3.5, insbesondere 19 > b / a > 6.5, erfüllt.

Vorteilhaft ist es, wenn die Festigkeitsträgerlage zumindest zwei in Material und / oder Aufbau unterschiedliche Festigkeitsträger aufweist. Dabei kann es sich um Bänder handeln, die sich im Haftvermittler und / oder dem Filamentmaterial und / oder der Bandbreite b und / oder der Bandhöhe a und / oder der Filamentanzahl und / oder der Filamentfeinheit und / oder der Bandfeinheit unterscheiden. Es kann auch mindestens ein Band enthaltend eine Vielzahl an Filamenten aus einem Aramid, beispielsweise para-Aramid, mit mindestens einem weiteren Band enthaltend eine Vielzahl an Filamenten aus einem dazu verschiedenen Aramid, beispielsweise meta-Aramid oder ein para-Aramid-Copolymer, kombiniert werden. Die Festigkeitsträgerlage kann auch neben mindestens einem Band enthaltend eine Vielzahl an Filamenten aus Aramid mindestens ein weiteres Band aufweisen, dessen Filamente aus einem zu Aramid verschiedenen Material, wie beispielsweise Nylon oder Rayon, gebildet sind. Die Festigkeitsträgerlage kann auch neben mindestens einem Band enthaltend eine Vielzahl an Filamenten aus Aramid mindestens einen anderen dem Fachmann bekannten Festigkeitsträger enthalten. Bei der so geschaffenen Festigkeitsträgerlage können beispielsweise Bänder enthaltend eine Vielzahl an Filamenten aus Aramid mit Korden aus Nylon kombiniert werden. Die Anordnung der unterschiedlichen Festigkeitsträger in der Festigkeitsträgerlage kann alternierend erfolgen. Durch die Verwendung unterschiedlicher Festigkeitsträger können die Vorteile der einzelnen Festigkeitsträger kombiniert werden.

Die Erfindung umfasst einen Fahrzeugluftreifen, welcher zumindest eine erfindungsgemäße Festigkeitsträgerlage enthält. Es handelt sich dabei vorzugsweise um einen PKW-Reifen oder einen Nutzfahrzeugreifen.

Die Erfindung umfasst insbesondere einen Fahrzeugluftreifen, der zumindest eine erfindungsgemäße Festigkeitsträgerlage der Gürtelbandage und / oder des Gürtels und / oder der Karkasse und / oder der Wulstverstärkung enthält. Es handelt sich dabei vorzugsweise um einen PKW-Reifen oder einen Nutzfahrzeugreifen. Ein Vorteil der Erfindung besteht darin, dass eine erfindungsgemäße Festigkeitsträgerlage sowohl als Festigkeitsträgerlage von Gürtel und / oder Gürtelbandage, als auch als Festigkeitsträgerlage der Karkasse und / oder der Wulstverstärkung eingesetzt werden kann.

Die Erfindung umfasst weiter einen Antriebsriemen, welcher zumindest eine erfindungsgemäße Festigkeitsträgerlage enthält. Es handelt sich dabei vorzugsweise um einen Antriebsriemen für ein Kraftfahrzeug.

Um eine zuverlässige Haftung des Festigkeitsträgers zum elastomeren Material zu gewährleisten, ist es zweckmäßig, den Festigkeitsträger mit einer Haftimprägnierung, z.B. mit einem RFL-Dip im 1- oder 2-Bad-Verfahren, zu versehen.

In einer vorteilhaften Ausführung beim Einsatz in Fahrzeugluftreifen orientiert sich die Erstreckungsrichtung und Länge der erfindungsgemäßen Festigkeitsträgerlagen sowie die darin enthaltenen Festigkeitsträger an den für Fahrzeugluftreifen üblichen Festigkeitsträgerlagen sowie Festigkeitsträgern. Eine übliche Festigkeitsträgerlage kann dabei auch durch mindestens zwei erfindungsgemäße Festigkeitsträgerlagen ersetzt werden. Abhängig vom Elastizitätsmodul der eingesetzten Bänder kann die Ersetzung von Stahlkorden durch Bänder, z.B. in den Festigkeitsträgerlagen des Gürtels, eine Gewichtsersparnis bringen.

In einer weiteren vorteilhaften Ausführung ist der mindestens eine Festigkeitsträger in eine Schicht elastomeren Materials eingebettet und von diesem umgeben. In einer anderen Ausführung ist der mindestens eine Festigkeitsträger, z.B. durch Kalandrieren, von einer Elastomerschicht ummantelt und in einer Festigkeitsträgerlage angeordnet. Auch dieser mindestens eine ummantelte Festigkeitsträger kann in eine Schicht elastomeren Materials eingebettet sein.

In einer weiteren vorteilhaften Ausführung ist die Oberfläche des Bandes zur Steigerung der Haftung zwischen Band und Haftimprägnierung oder Band und elastomerem Material mechanisch, physikalisch und / oder chemisch aktiviert.

Ein Beispiel für ein für die Erfindung geeignetes Band ist unter dem Handelsnamen "Twaron Tape D2800" (Teijin Aramid) erhältlich. Es weist einen einzigen, aufgespreizten Aramidgarn auf, welcher mit einer Materialmatrix imprägniert und mittels dieser fixiert ist.

Ein Elastomerprodukt kann mehr als eine Festigkeitsträgerlage beinhalten. In ihren Ausführungen können die mindestens zwei Festigkeitsträgerlagen weitgehend ident sein oder sich beispielsweise in Material und / oder Aufbau und / oder Anordnung und / oder Erstreckungsrichtung der Festigkeitsträger unterscheiden. Die Festigkeitsträgerlagen können kontaktierend oder beabstanded in ihrer flächigen Erstreckung übereinander und / oder nebeneinander angeordnet sein. Die Festigkeitsträger von unterschiedlichen Festigkeitsträgerlagen können in eine gemeinsame Schicht elastomeren Materials eingebettet sein.

Weitere Merkmale, Vorteile und Einzelheiten der Erfindung werden nun anhand der Figuren, die schematische Ausführungsbeispiele darstellen, näher beschrieben. Dabei zeigt die:
Fig. 1 einen Teilradialschnitt durch einen Fahrzeugluftreifen;
Fig. 2 einen Querschnitt durch einen Abschnitt einer Festigkeitsträgerlage 13 gemäß der Erfindung;
Fig. 3 einen Querschnitt durch einen Abschnitt einer anderen Festigkeitsträgerlage 13 gemäß der Erfindung;
Fig. 4 einen Querschnitt durch einen Abschnitt einer anderen Festigkeitsträgerlage 13 gemäß der Erfindung.

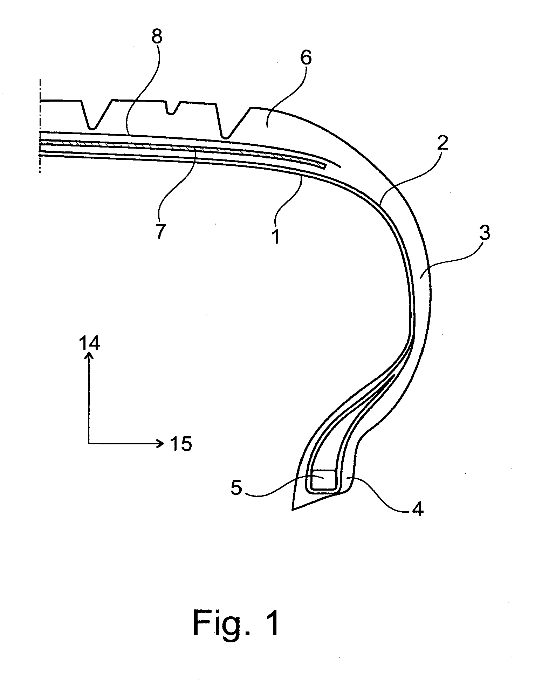

Die Fig. 1 zeigt die rechte Hälfte eines Querschnittes durch einen Fahrzeugluftreifen für einen Personenkraftwagen. Die wesentlichen Bauteile, aus welchen sich der dargestellte Fahrzeugluftreifen zusammensetzt, sind eine weitgehend luftundurchlässige Innenschicht 1, eine zumindest eine Festigkeitsträgerlage 13 beinhaltende Karkasse 2, die in herkömmlicher Weise vom Zenitbereich des Fahrzeugluftreifens über die Seitenwände 3 bis in die Wulstbereiche 4, enthaltend mindestens eine Festigkeitsträgerlage 13 als Wulstverstärkung, reicht und dort durch Umschlingen zugfester Wulstkerne 5 verankert ist, einen radial oberhalb der Karkasse befindlichen profilierten Laufstreifen 6 und einen zwischen dem Laufstreifen 6 und der Karkasse 2 angeordneten, zwei Festigkeitsträgerlagen 13 beinhaltenden Gürtel 7, welcher in herkömmlicher Weise radial außen mit der Festigkeitsträgerlage 13 der Gürtelbandage 8 abgedeckt ist.

Bei Fahrzeugluftreifen in wie in Fig. 1 gezeigter radialer Bauart sind die Festigkeitsträger der Festigkeitsträgerlage 13 der Karkasse 2 in etwa parallel zueinander in etwa in radialer Richtung 14 angeordnet. Der Gürtel 7 weist zwei weitgehend übereinander angeordnete Festigkeitsträgerlagen 13 auf, wobei die Festigkeitsträger in den einzelnen Lagen jeweils in etwa parallel zueinander ausgerichtet sind. Die Erstreckungsrichtung der Festigkeitsträger in den zwei Festigkeitsträgerlagen 13 verlaufen in der einen Lage in spitzem Winkel zum Reifenumfang in der einen Richtung steigend, in der anderen Lage in spitzem Winkel zum Reifenumfang in der anderen Richtung steigend. Die Festigkeitsträgerlage 13 der Gürtelbandage 8 beinhaltet einen Festigkeitsträger, der kontinuierlich entlang der axialen Breite gewickelt ist.

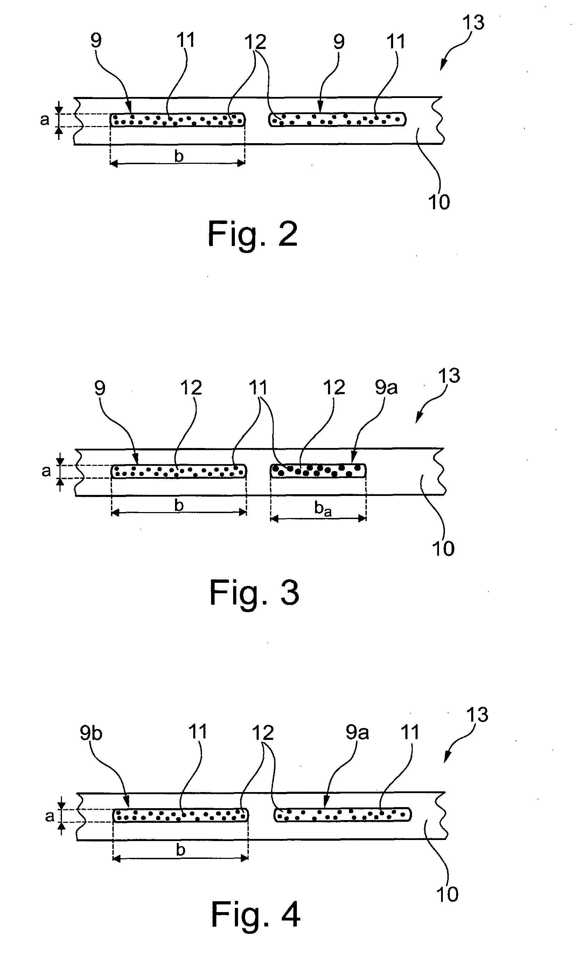

Figur 2 zeigt einen Querschnitt durch einen Abschnitt einer erfindungsgemäßen Festigkeitsträgerlage 13, beinhaltend zwei Bändern 9 als Festigkeitsträger, welche in elastomeres Material 10 eingebettet sind. Die Querschnittsebene steht hierbei senkrecht zur Längserstreckungsrichtung der Bänder.

Die Bänder 9 weisen eine Vielzahl an Filamenten 11 aus para-Aramid auf. Der Übersichtlichkeit halber sind in Fig. 2 nur eine geringe Zahl der Filamente 11 dargestellt. Die Filamente 11 sind mittels eines vernetzbaren Harzes als Haftvermittler 12 zusammengehalten. Der Haftvermittler 12 macht dabei 4 Gew.-% des Gewichtes der Bänder 9 aus. Die Bänder 9 weisen eine Feinheit von 1300 dtex und eine Anzahl von 1000 Filamenten 11 auf. Die Querschnittshöhe a genügt der Bedingung a = 90 µm, das Verhältnis von Querschnittsbreite b zu Querschnittshöhe a genügt der Bedingung b / a = 15. Die Bänder 9 sind mit einem RFL-Dip zur Haftimprägnierung versehen.

In Fig. 3 ist ein Querschnitt eines Ausschnittes einer weiteren Festigkeitsträgerlage 13 dargestellt. Die Festigkeitsträgerlage 13 unterscheidet sich von der Festigkeitsträgerlage 13 in Fig. 2 darin, dass die Filamente 11 der Bänder 9 durch einen Haftvermittler 12 vom Typ RFL zusammengehalten werden. Dieser tritt mit dem elastomeren Material in Wechselwirkung, wodurch eine zusätzliche Haftimprägnierung der Bänder 9 entfällt. Das rechte Band 9a der in Fig. 3 dargestellten Bänder 9 weist zudem eine Feinheit von 800 dtex sowie eine Anzahl an Filamenten 11 von 550, sowie eine Querschnittsbreite bₐ, welche der Bedingung bₐ / a = 10 genügt, auf.

In Fig. 4 ist ein Querschnitt eines Ausschnittes einer weiteren Festigkeitsträgerlage 13 dargestellt. Die Festigkeitsträgerlage 13 unterscheidet sich von der Festigkeitsträgerlage 13 in Fig. 2 darin, dass die Filamente 11 der Bänder 9 durch einen Haftvermittler 12 vom Typ RFL zusammengehalten werden. Dieser tritt mit dem elastomeren Material in Wechselwirkung, wodurch eine zusätzliche Haftimprägnierung der Bänder 9 entfällt. Die Filamente des rechten Bandes 9a sind aus para-Aramid. Das linke Band 9b weist eine Feinheit von 1100 dtex und eine Anzahl von 1100 Filamenten aus PA 6.6 auf und erfüllt die Bedingung b / a = 14.

### Bezugszeichenliste

### (Teil der Beschreibung)

- 1: Innenschicht
- 2: Karkasse
- 3: Seitenwand
- 4: Wulstbereich
- 5: Wulstkern
- 6: Laufstreifen
- 7: Gürtel
- 8: Gürtelbandage
- 9: Band
- 9a: rechtes Band
- 9b: linkes Band
- 10: elastomeres Material
- 11: Filament
- 12: Haftvermittler
- 13: Festigkeitsträgerlage
- 14: radiale Richtung
- 15: axiale Richtung
- a: Querschnittshöhe des Bandes
- b: Querschnittsbreite des Bandes

## Patentansprüche

1. Festigkeitsträgerlage (13) für Fahrzeugluftreifen sowie für Antriebsriemen, wobei die Festigkeitsträgerlage (13) zumindest einen Festigkeitsträger aufweist, welcher in elastomeres Material (10) eingebettet ist, wobei der Festigkeitsträger aus nicht-metallischen Materialien besteht und sein Querschnitt der Bedingung a < b entspricht, wobei a die Querschnittshöhe und b die Querschnittsbreite des Festigkeitsträgers definiert, und wobei der Festigkeitsträger in der Festigkeitsträgerlage (13) derart angeordnet ist, dass die Erstreckungsrichtung von b in etwa parallel zur flächigen Erstreckung der Festigkeitsträgerlage (13) ausgerichtet ist,
der Festigkeitsträger ein Band (9) ist, welches eine Vielzahl an Filamenten (11) aus Aramid enthält, welche in etwa parallel zur Längserstreckung des Bandes (9) angeordnet sind, und dass die Filamente (11) innerhalb des Bandes (9) mittels eines
Haftvermittlers (12) zusammengehalten sind, **dadurch gekennzeichnet, dass** das Band (9) eine Feinheit von 50 bis 7000 dtex, bevorzugt von 500 bis 3500 dtex, besonders bevorzugt von 1200 bis 1500 dtex, aufweist, und dass das Band (9) eine Anzahl von 25 bis 4500 Filamenten (11), bevorzugt eine Anzahl von 450 bis 2000 Filamenten (11), besonders bevorzugt eine Anzahl von 500 bis 1200 Filamenten (11), aufweist.

2. Festigkeitsträgerlage (13) nach Anspruch 1,
**dadurch gekennzeichnet, dass** das Band (9) eine Vielzahl an Filamenten (11) aus para-Aramid enthält.

3. Festigkeitsträgerlage (13) nach zumindest einem der vorangehenden Ansprüche,
**dadurch gekennzeichnet, dass** der Haftvermittler (12) ein vernetzbares Harz, ein flüssiges thermoplastisches Harz, ein Wachs oder eine Substanz, welche mit elastomerem Material (10) wechselwirken kann, ist.

4. Festigkeitsträgerlage (13) nach zumindest einem der vorangehenden Ansprüche,
**dadurch gekennzeichnet, dass** die Querschnittshöhe a der Bedingung 1 µm < a < 1500 µm, vorzugsweise 1 µm < a < 500 µm, bevorzugt 1 µm < a < 200 µm, entspricht.

5. Festigkeitsträgerlage (13) nach zumindest einem der vorangehenden Ansprüche,
**dadurch gekennzeichnet, dass** die Querschnittsbreite b der Bedingung 100 µm < b < 15000 µm, bevorzugt 300 µm < b < 10000 µm, genügt, und dass das Verhältnis von Querschnittsbreite b zu Querschnittshöhe a die Bedingung 4000 > b / a > 1.5, insbesondere 200 > b / a > 3.5, insbesondere 19 > b / a > 6.5, erfüllt.

6. Festigkeitsträgerlage (13) nach zumindest einem der vorangehenden Ansprüche,
**dadurch gekennzeichnet, dass** die Festigkeitsträgerlage (13) zumindest zwei in Material und / oder Aufbau unterschiedliche Festigkeitsträger aufweist.

7. Fahrzeugluftreifen, enthaltend zumindest eine Festigkeitsträgerlage (13) gemäß zumindest einem der Ansprüche 1 bis 6.

8. Fahrzeugluftreifen, enthaltend zumindest eine Festigkeitsträgerlage (13) der Gürtelbandage (8) und / oder des Gürtels (7) und / oder der Karkasse (2) und / oder der Wulstverstärkung (5) gemäß zumindest einem der Ansprüche 1 bis 6.

9. Antriebsriemen, enthaltend zumindest eine Festigkeitsträgerlage (13) gemäß zumindest einem der Ansprüche 1 bis 6.

## Claims

1. Reinforcing layer (13) for pneumatic vehicle tyres and for drive belts, wherein the reinforcing layer (13) has at least one reinforcing element, which is embedded in elastomeric material (10), wherein the reinforcing element consists of non-metallic materials and the cross section thereof satisfies the condition a < b, where a is the cross-sectional height and b is the cross-sectional width of the reinforcing element, and wherein the reinforcing element is arranged in the reinforcing layer (13) in such a way that the direction of extent of b is aligned approximately parallel to the planar extent of the reinforcing layer (13),
the reinforcing element is a band (9), which contains a large number of filaments (11) made of aramid, which are arranged approximately parallel to the longitudinal extent of the band (9), and the filaments (11) are held together within the band (9) by means of an adhesion promoter (12), **characterized in that** the band (9) has a fineness of 50 to 7000 dtex, with preference of 500 to 3500 dtex, with particular preference of 1200 to 1500 dtex, and **in that** the band (9) has a number of 25 to 4500 filaments (11), with preference a number of 450 to 2000 filaments (11), with particular preference a number of 500 to 1200 filaments (11).

2. Reinforcing layer (13) according to Claim 1, **characterized in that** the band (9) contains a large number of filaments (11) made of para-aramid.

3. Reinforcing layer (13) according to at least one of the preceding claims,
**characterized in that** the adhesion promoter (12) is a crosslinkable resin, a liquid thermoplastic resin, a wax or a substance that can interact with elastomeric material (10).

4. Reinforcing layer (13) according to at least one of the preceding claims,
**characterized in that** the cross-sectional height a satisfies the condition 1 µm < a < 1500 µm, preferably 1 µm < a < 500 µm, with preference 1 µm < a < 200 µm.

5. Reinforcing layer (13) according to at least one of the preceding claims,
**characterized in that** the cross-sectional width b satisfies the condition 100 µm < b < 15000 µm, with preference 300 µm < b < 10000 µm, and **in that** the ratio of the cross-sectional width b to the cross-sectional height a satisfies the condition 4000 > b/a > 1.5, in particular 200 > b/a > 3.5, in particular 19 > b/a > 6.5.

6. Reinforcing layer (13) according to at least one of the preceding claims,
**characterized in that** the reinforcing layer (13) has at least two reinforcing elements differing in material and/or structure.

7. Pneumatic vehicle tyre, containing at least one reinforcing layer (13) according to at least one of Claims 1 to 6.

8. Pneumatic vehicle tyre, containing at least one reinforcing layer (13) of the breaker belt bandage (8) and/or of the breaker belt (7) and/or of the carcass (2) and/or of the bead reinforcement (5) according to at least one of Claims 1 to 6.

9. Drive belt, containing at least one reinforcing layer (13) according to at least one of Claims 1 to 6.

## Revendications

1. Couche de renfort (13) pour pneus de véhicule ainsi que pour courroies d'entraînement, dans laquelle la couche de renfort (13) présente au moins un renfort qui est noyé dans un matériau élastomère (10), dans laquelle le renfort se compose de matériaux non métalliques et sa section transversale correspond à la condition a < b, dans laquelle a définit la hauteur de la section transversale et b définit la largeur du renfort, et dans laquelle le renfort est disposé dans la couche de renfort (13) d'une manière telle que la direction d'extension de b soit sensiblement parallèle à l'extension de surface de la couche de renfort (13), dans laquelle le renfort est une bande (9), qui contient une multiplicité de filaments (11) en aramide, qui sont disposés sensiblement parallèlement à l'extension longitudinale de la bande (9), et les filaments (11) sont tenus ensemble à l'intérieur de la bande (9) au moyen d'un agent adhésif (12), **caractérisée en ce que** la bande (9) présente une finesse de 50 à 7000 dtex, de préférence de 500 à 3500 dtex, de préférence encore de 1200 à 1500 dtex, et **en ce que** la bande (9) présente un nombre de 25 à 4500 filaments (11), de préférence un nombre de 450 à 2000 filaments (11), de préférence encore un nombre de 500 à 1200 filaments (11).

2. Couche de renfort (13) selon la revendication 1, **caractérisée en ce que** la bande (9) contient une multiplicité de filaments (11) en para-aramide.

3. Couche de renfort (13) selon au moins une des revendications précédentes, **caractérisé en ce que** l'agent adhésif (12) est une résine réticulable, une résine thermoplastique liquide, une cire ou une substance, qui peut interagir avec un matériau élastomère (10).

4. Couche de renfort (13) selon au moins une des revendications précédentes, **caractérisée en ce que** la hauteur de section transversale a correspond à la condition 1 µm < a < 1500 µm, de préférence 1 µm < a < 500 µm, de préférence 1 µm < a < 200 µm.

5. Couche de renfort (13) selon au moins une des revendications précédentes, **caractérisée en ce que** la largeur de section transversale b satisfait la condition 100 µm < b < 15000 µm, de préférence 300 µm < b < 10000 µm, et **en ce que** le rapport de la largeur de section transversale b à la hauteur de section transversale a remplit la condition 4000 > b/a > 1,5, en particulier 200 > b/a > 3,5, et en particulier 19 > b/a > 6,5.

6. Couche de renfort (13) selon au moins une des revendications précédentes, **caractérisée en ce que** la couche de renfort (13) présente au moins deux renforts différents au niveau du matériau et/ou de la structure.

7. Pneu de véhicule, contenant au moins une couche de renfort (13) selon au moins une des revendications 1 à 6.

8. Pneu de véhicule, contenant au moins une couche de renfort (13) du bandage de ceinture (8) et/ou de la ceinture (7) et/ou de la carcasse (2) et/ou du renfort du talon (5) selon au moins une des revendications 1 à 6.

9. Courroie d'entraînement, contenant au moins une couche de renfort (13) selon au moins une des revendications 1 à 6.
